# FASCICULE DE BREVET EUROPEEN

(11) **EP 1 234 691 B1**
(45) Date de publication et mention de la délivrance du brevet: **14.04.2004**
(21) Numéro de dépôt: 02356031.1
(22) Date de dépôt: 20.02.2002
(51) Int. Cl.: B60B 27/02

(54) **Moyeu pour des roues avec rayons pour véhicules légers**
Speichenradnabe für leichte Fahrzeuge
Hub for wheel with spokes to be used for light vehicles

(30) Priorité: 23.02.2001 FR 0102838
(43) Date de publication de la demande: 28.08.2002
(73) Titulaire: DJ2 (Société par Actions Simplifiée), 42110 Feurs (FR)
(72) Inventeur: Jouve, Didier, 42340 Veauche (FR); Tamet, Eric, 42130 Saint Agathe la Boutheresse (FR)
(74) Mandataire: Dupuis, François

(56) Documents cités:
- DE-A- 3 406 650
- DE-A- 4 201 745
- US-A- 5 829 844

## Description

L'invention se rattache au secteur technique des moyeux pour véhicules légers et, en particulier les fauteuils roulants pour handicapés, les cycles et bicyclettes et autres moyens de transport similaires.

Le demandeur fabrique depuis de nombreuses années ce type de moyeux qui sont en général en aluminium, notamment pour des questions de légèreté. Dans les applications aux fauteuils roulants pour handicapés, le demandeur exploite les brevets français N°2725128, N°2731898. Pour les applications aux cycles, on peut citer par exemple les brevets français N°2588513, N°2548096.

Certains moyeux peuvent être agencés avec deux flasques périphériques munis d'une pluralité de trous, pour le passage de la fixation des rayons de la roue. D'autres moyeux sont agencés pour recevoir un dispositif à montage rapide pour la fixation sur la roue.

Ces moyeux comprennent ainsi un corps cylindrique formant palier, recevant intérieurement des moyens de roulement et de guidage d'axes. En extrémité, deux flasques sont rapportés et fixés d'une manière définitive par soudure ou autre mode de liaison. Lesdits flasques présentent un nombre déterminé de trous pour la fixation des rayons de la roue. On comprend donc qu'il faille autant de moyeux que de types de roues à rayons et qu'il n'y a donc aucune possibilité de standardisation. Les flasques étant principalement des pièces d'usure, lorsque lesdits flasques sont détériorés, il faut changer le moyeu dans sa globalité.

Outre les coûts de fabrication qui sont élevés, par la nature du matériau (aluminium), du montage (liaison, flasques paliers), les fabricants sont obligés d'avoir des stocks importants pour répondre aux besoins et à la variété des caractéristiques des roues et de leur nombre de rayons.

On connaît aussi l'enseignement des brevets DE 4201745 et US 5829844.

Le brevet DE 4201745 décrit un moyeu de roues pour véhicule léger du type fauteuils roulants, cycles et moyens de transport similaires, du type comprenant un corps cylindrique (1) recevant, en extrémité, des flasques en forme de disque, recevant dans leur couronne, des trous de fixation, des extrémités de rayons de roues, le corps recevant intérieurement des moyens de roulement avec ou sans entretoise entre lesdits moyens de roulement, le corps cylindrique (1) étant réalisé en un matériau synthétique, et est aménagé pour recevoir à chacune de ses extrémités (1a-1b) un flasque (2-3) sous forme de disque présentant sur sa couronne une pluralité de trous pour la fixation des rayons de roue, lesdits flasques étant rapportés et fixés sur ou avec les extrémités du corps par montage pour assurer une tenue ferme, le corps et les flasques étant agencés avec des moyens de liaison mâle femelle (7-7) complémentaires permettent leur positionnement relatif, le corps (1) étant agencé à chacune de ses extrémités (1a-1b) sur sa périphérie circulaire avec une alternance de languettes (1g) et de saillies ou creux, lesdites languettes constituant des crans, cet agencement étant établi selon un pas régulier et sur une profondeur sensiblement supérieure à l'épaisseur des flasques (2-3).

Le problème posé était donc de rechercher et concevoir un nouveau type de moyeu qui puisse répondre à des exigences de qualité très satisfaisantes et qui permette une réduction des stocks, avec une standardisation de production, et offrant une qualité de tenue des flasques sur le moyeu optimisée.

Un autre but recherché était de simplifier la fabrication et le montage du moyeu et d'en réduire le coût grâce par exemple à une limitation des pièces composants pour une gamme de moyeux comportant un nombre de rayons différents, tels que 28, 32, 36.

Un autre but était, à partir de ces démarches, de réduire le poids du moyeu d'une manière significative.

Ces buts et d'autres encore ressortiront bien de la suite de la description.

Selon l'invention, le moyeu de roues pour véhicule léger du type fauteuils roulants, cycles et moyens de transport similaires, du type comprenant un corps cylindrique recevant, en extrémité, des flasques en forme de disque, recevant dans leur partie annulaire, des trous de fixation, des extrémités de rayons de roues, le corps recevant intérieurement des moyens de roulement avec ou sans entretoise entre lesdits moyens de roulement, est caractérisé en ce que le corps cylindrique est réalisé en un matériau synthétique, et est aménagé pour recevoir à chacune de ses extrémités un flasque sous forme de disque présentant sur sa couronne une pluralité de trous pour la fixation des rayons de roue, lesdits flasques étant rapportés et fixés sur ou avec les extrémités du corps pour assurer une tenue ferme, et en ce que le corps et les flasques sont agencés avec des moyens de liaison mâle femelle complémentaires permettent leur positionnement relatif, et en ce que le corps est agencé à chacune de ses extrémités sur sa périphérie circulaire avec une alternance de languettes et de saillies ou creux, lesdites languettes constituant des crans, et en ce que cet agencement est établi selon un pas régulier et sur une profondeur sensiblement supérieure à l'épaisseur des flasques, *ce moyeu étant caractérisé* en ce que les moyens de roulement sont établis avec un diamètre sensiblement supérieur au diamètre des cavités réceptrices formées dans le moyeu et ces moyens de roulement sont emmanchés à force dans leur siège, et en ce que leur positionnement provoque une légère déformation des extrémités du corps de moyeu, notamment au niveau des languettes qui ont tendance à s'expanser très légèrement radialement, et en ce que lesdites languettes en débordement ont un effet de contre appui sur les flasques et donc de retenue.

Selon une autre caractéristique, le corps est agencé à chacune de ses extrémités sur sa périphérie circulaire avec une alternance de languettes et de saillies ou creux, lesdites languettes constituant des crans, et en ce que cet agencement est établi selon un pas régulier et sur une profondeur sensiblement supérieure à l'épaisseur des flasques, et en ce que ces languettes sont profilées de manière identique, avec un profil curviligne.

Selon une autre caractéristique, l'une des languettes est profilée différemment en jouant la fonction de détrompeur.

Pour fixer l'objet de l'invention illustré d'une manière non limitative aux figures des dessins où :

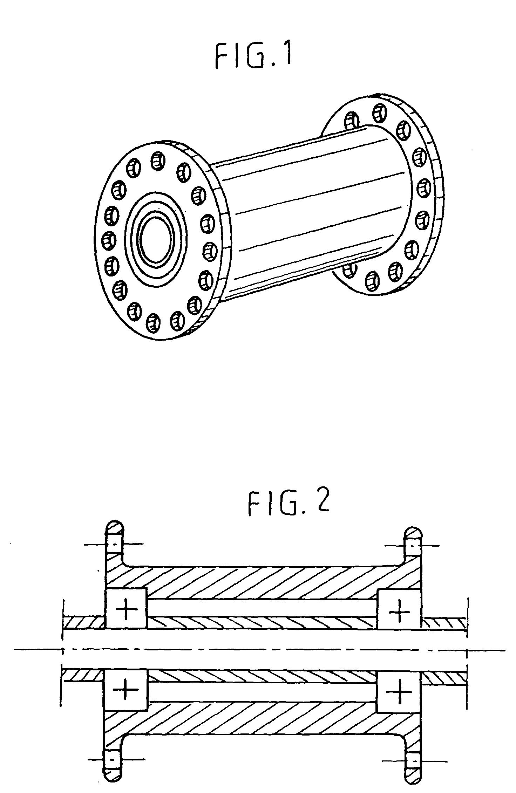

- La figure 1 est une vue en perspective d'un moyeu selon l'art antérieur.
- La figure 2 est une vue en coupe longitudinale d'un moyeu selon l'art antérieur.
- La figure 3 est une vue en perspective éclatée avant montage d'un moyeu selon l'invention dans une première mise en oeuvre.
- La figure 4 est une vue en coupe longitudinale du moyeu après montage selon la figure 3.
- La figure 5 est une vue en coupe transversale, selon la ligne 5.5 de la figure 4.
- La figure 6 est une vue en perspective éclatée avant montage d'un moyeu selon l'invention dans une seconde mise en oeuvre.
- La figure 7 est une vue de face d'un des flasques du moyeu selon la figure 6.
- La figure 8 est une partielle à grande échelle d'un détail de profil du flasque selon la figure 7.
- La figure 9 est une vue en coupe longitudinale du moyeu selon la figure 6, avec une représentation à gauche avant montage du roulement gauche, et à droite après montage du roulement droit.
- La figure 10 est une vue partielle à grande échelle illustrant le positionnement du flasque sur le moyeu avant mise en place du roulement selon la mise en oeuvre de la figure 6.
- La figure 11 est une vue partielle en complément de la figure 10, mais après mise en place du flasque et des moyens de roulement.
- La figure 12 est une vue de face suivant la figure 10.

Afin de rendre plus concret l'objet de l'invention, on le décrit maintenant d'une manière non limitative illustrée aux figures des dessins.

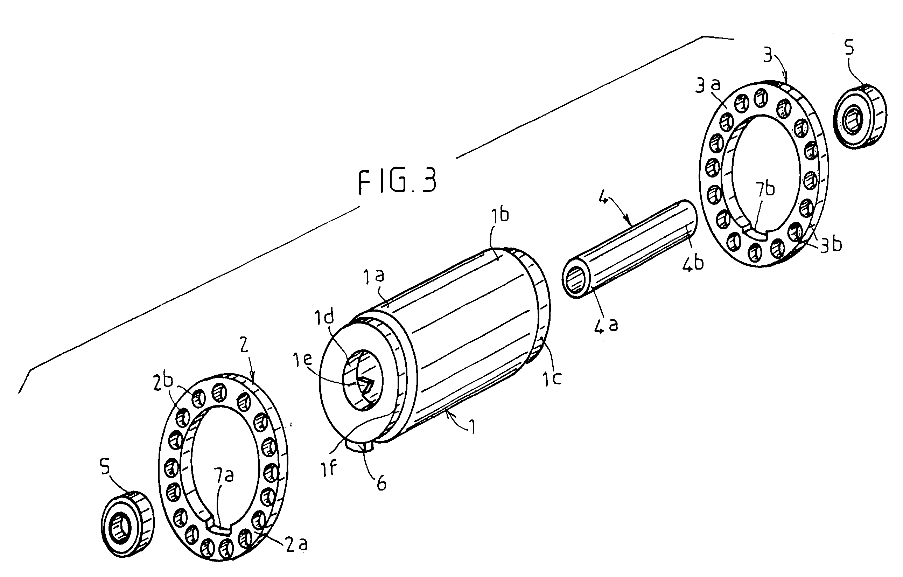

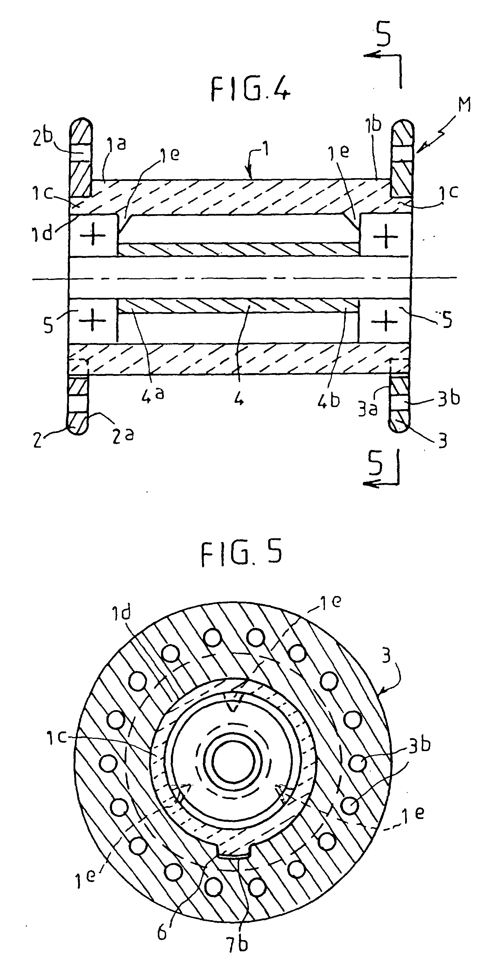

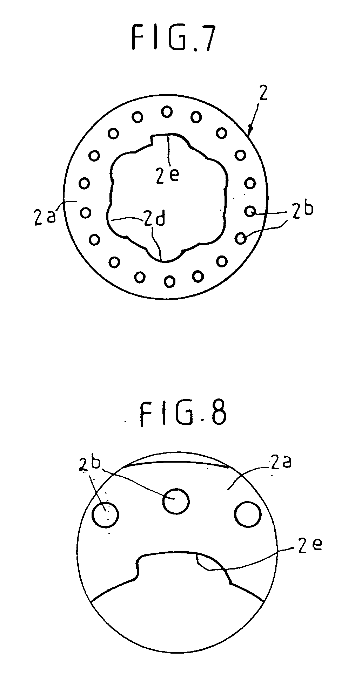

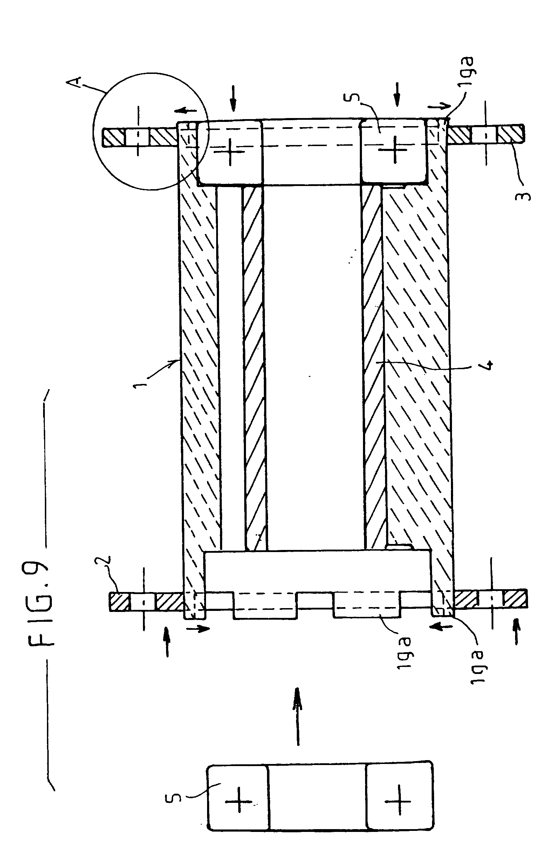

Le moyeu, selon l'invention, et dans les deux mises en oeuvre illustrées figures 3 à 5 et 6 à 12 respectivement, est référencé dans son ensemble par (M). Il comprend un corps cylindrique (1) réalisé en un matériau synthétique rigide, ce corps peut être par exemple en matière plastique rigide, ou être composé de fibres et de résines dans un ensemble composite, ou en tous autres matériaux équivalents.

Ledit corps est profilé et est obtenu par injection ou autre procédé. Ce corps est aménagé pour recevoir à chacune de ses extrémités (1a-1b) un flasque (2-3) sous forme de disque rapporté et présentant sur sa couronne (2a, 3a) une pluralité de trous (2b-3b) pour la fixation des rayons de roues pour fauteuils roulants, cycles ou autres. Les flasques sont rapportés et fixées sur ou avec les extrémités du corps par emmanchement à force ou clipsage pour assurer une tenue ferme et éviter tout démontage intempestif. Par ailleurs, le corps (1) est creux en présentant intérieurement des moyens de guidage (1c) d'une entretoise (4) de petit diamètre, non débouchante du corps et dont les extrémités (4a-4b) sont susceptibles de constituer des zones de butée à des moyens de roulement (5) disposés de chaque côté du corps. Ces moyens de roulement du type à billes par exemple sont susceptibles de pénétrer dans des cavités ou chambrages (1d) débouchantes formées sur le corps. Ces moyens de roulement (5) viennent ainsi en butée inférieure contre l'entretoise et en butée supérieure contre les formes en saillie (1e) formées sur le corps. Le corps (1) et les flasques (2-3) sont ainsi agencés avec des moyens de liaison mâles femelles (6-7) complémentaires permettant leur positionnement relatif, leur fixation en évitant après mise en place tout déplacement des flasques par rapport au corps lors du montage des rayons par exemple. Ces moyens d'assemblage et de liaison contribuent à la rigidité du moyeu final. Les flasques qui constituent des pièces d'usure sont avantageusement métalliques, en aluminium, ou similaires, afin de garantir une parfaite mise en place des rayons, sans risque de déformation notamment par ovalisation des trous (2b-3b). Les flasques peuvent être également établis à partir de matériaux synthétiques, ou résines de synthèse, sous réserve de répondre aux critères d'utilisation. Le moyeu ainsi défini dans son concept général selon l'invention, peut être mis en oeuvre selon deux réalisations particulières ci-après décrites.

En se référant aux figures 3 à 5, correspondant à la première réalisation, le corps présente à chacune de ses extrémités latérales (1a-1b) un épaulement périphérique (1f) permettant 1e positionnement, le centrage du flasque (3) sous forme de disque, rapporté. Chaque flasque (3) présente comme moyen femelle de liaison (7) avantageusement dans sa cavité intérieure au moins une encoche (7a) susceptible de s'engager sur au moins le moyen mâle (6) établi sur le corps sur une forme en saillie formant détrompeur et établie dans les parties latérales d'extrémité du corps cylindrique. Lesdits flasques (2-3) sont ainsi convenablement centrés et fixés sur le corps et par exemple emmanchés à force ou clipsés ou autrement pour l'obtention d'une liaison définitive.

Le corps cylindrique présente intérieurement des nervures (1e) formées dans l'alésage du corps et formant butée à des organes de roulement (5) pouvant être insérés dans des chambrages (1d) formés dans le corps entre lesdites nervures et les extrémités du corps. L'entretoise (4) est ensuite disposée entre les roulements (5). Cette entretoise tubulaire présente un alésage permettant le passage d'un axe de fixation (8) de la roue par des dispositifs à montage rapide, comme décrit, par exemple, dans les brevets du déposant, selon l'art antérieur.

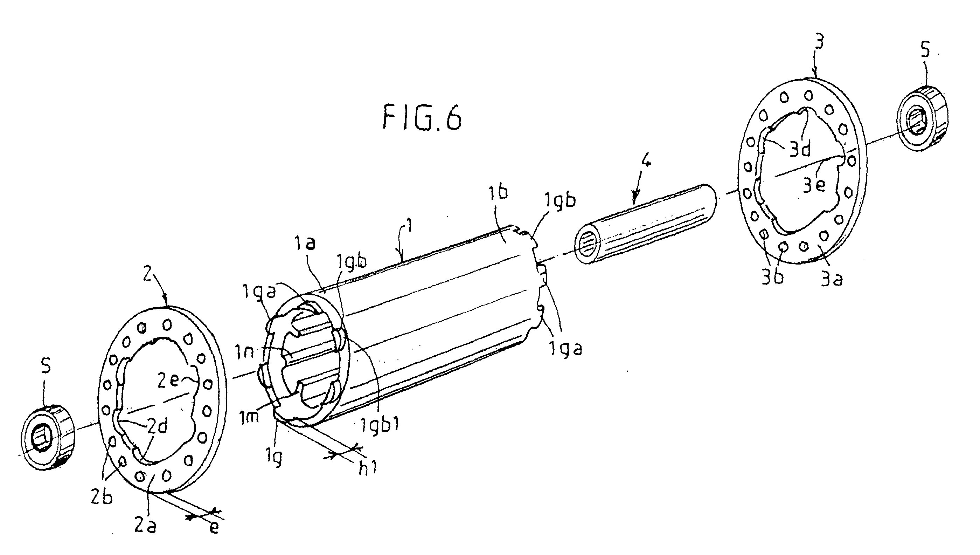

On se réfère maintenant à la seconde variante de réalisation illustrée aux figures 6 à 12. Ainsi, le corps (1) est agencé à chacune de ses extrémités (1a-1b) sur sa périphérie circulaire avec une alternance de languettes (1g) et de saillies ou creux, lesdites languettes constituant des crans. Cet agencement est établi selon un pas régulier et sur une profondeur sensiblement supérieure à l'épaisseur des flasques (2-3). Ces languettes sont ainsi profilées de manière identique (1g.a), avec un profil par exemple curviligne. Dans une mise en oeuvre spécifique en variante, l'une des languettes (1g.b) est profilée différemment en jouant la fonction de détrompeur. Ainsi, la languette jouant cette fonction (1g.b) présente une partie complémentaire profilée en rampe ou autrement (1g.b1).

Parallèlement, les deux flasques (2-3) sont agencés sur leur couronne intérieure avec des cavités (2d-3d) toutes identiques de profil complémentaire à celles des languettes (1g.a) pour permettre leur insertion et positionnement autour de ces languettes. Par contre, l'une des cavités (2e-3e) présente un profil différent des cavités (2d-3d) pour permettre l'adaptation autour de la languette détrompeur (1g.b1) formée sur le corps dans l'hypothèse de sa mise en oeuvre. Il y a donc ainsi une position très précise des flasques sur le corps avec ou sans détrompeur, leur blocage en position une fois installés par des moyens d'ancrage mâles femelles ainsi décrits, empêchant la rotation relative des flasques par rapport au moyeu. Comme indiqué précédemment, la hauteur (h1) des languettes (1g) est sensiblement supérieure à l'épaisseur (e) des flasques (2-3), de sorte qu'après positionnement des flasques sur les extrémités des moyeux, lesdites languettes débordent sensiblement.

Intérieurement, le corps (1) présente des moyens de guidage de l'entretoise sous forme par exemple de trois nervures (1m) radiales longitudinales établies dans la longueur du corps en constituant entre autre des moyens de butée des roulements. Les trois nervures sont ainsi orientées à 120°. En outre, le corps (1) présente entre les nervures précitées trois autres zones en saillie (1n) de moindre hauteur, mais pouvant être établies sur la longueur du moyeu. Les saillies *(1n)* et nervures (1m) constituent par leur face en regard des moyens de butée du roulement (5).

Selon une autre disposition importante de l'invention, les moyens de roulement (5) sont établis avec un diamètre sensiblement supérieur au diamètre des cavités réceptrices formées dans le moyeu et ces moyens de roulement sont emmanchés à force dans leur siège. Cela provoque une légère déformation des extrémités du corps de moyeu, notamment au niveau des languettes qui ont tendance à s'expanser très légèrement radialement. Cela peut provoquer ainsi un léger déplacement de matière par fluage, et donc un coincement très ferme des flasques (2-3) en regard. Par ailleurs, lesdites languettes (1g) débordent sensiblement des flasques, elles peuvent ainsi avoir un effet de contre appui sur les flasques et donc de retenue. On obtient ainsi une liaison ferme supprimant tout risque d'échappement des flasques par rapport au moyeu.

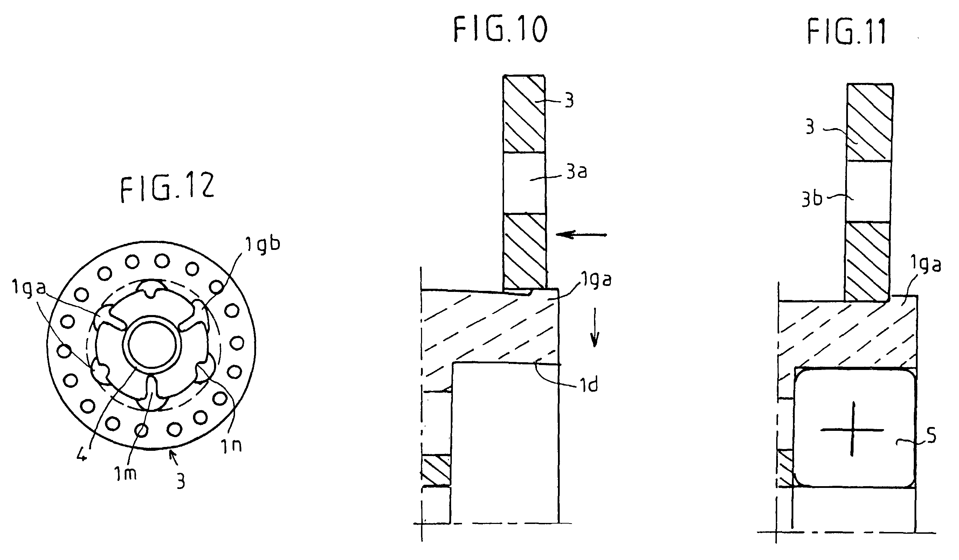

Pour accentuer cet effet de retenue, ainsi que représenté aux figures 10 et 11 des dessins, on peut prévoir une légère échancrure ou ligne d'affaiblissement ou réduction d'épaisseur formée sur la périphérie des languettes, leur conférant ainsi une certaine élasticité et déformation lors de la mise en place des roulements.

Selon une autre disposition de l'invention, la position des languettes assurant la fonction de détrompeur est sensiblement décalée l'une par rapport à l'autre sans alignement avec un décalage angulaire de quelques degrés, de l'ordre de 15° par rapport par exemple, pour permettre ainsi une position en quinconce des rayons de roue de part et d'autre du moyeu.

Ainsi selon l'invention, le moyeu tel que défini offre de nombreux avantages.

Un premier avantage réside dans le fait que le fabricant peut concevoir un corps cylindrique standard à tous types de moyeux, et avoir des gammes de flasques très variées avec ou sans détrompeur, en fonction des types de roues et nombre de rayons. Le nombre de trous sur les flasques peut être par exemple de 28, 32, 36 ou autre. Dans la gamme de fabrication, seuls les flasques sont à modifier, les autres éléments étant standardisés. Il n'y a pas d'autres éléments de liaison du type colle, vis et autres.

Le montage rapide du moyeu par ses composants ne pose pas de problèmes particuliers en respectant les critères de qualité de rigidité des moyeux, lorsqu'ils sont utilisés, quelles que soient les applications. Le montage des moyeux peut s'effectuer en automatique.
En pratique, l'assemblage du corps du moyeu avec les flasques d'extrémité peut être obtenu par tous moyens de liaison mâle femelle. Lorsque le moyeu est monté avec ses composants, il est indémontable. Son coût de revient, par rapport à l'art antérieur, est très largement moindre. C'est une fabrication standardisée des corps en matériaux plastiques ou synthétiques. On souligne également sa légèreté accrue. L'entretoise peut aussi être en matériau synthétique.

La solution du demandeur répond de manière originale au problème posé, avec un gain en termes de coûts de fabrication, une adaptabilité immédiate aux besoins les plus divers en fonction des roues et leur nombre de rayons.

Le moyeu, selon l'invention, est applicable pour tous types de véhicules légers, fauteuils roulants, cycles, bicyclettes et pour toutes roues à rayons pour des applications diverses.

## Revendications

1. Moyeu de roues pour véhicule léger du type fauteuils roulants, cycles et moyens de transport similaires, du type comprenant un corps cylindrique (1) recevant, en extrémité, des flasques en forme de disque, recevant dans leur *couronne,* des trous de fixation, des extrémités de rayons de roues, le corps recevant intérieurement des moyens de roulement avec ou sans entretoise entre lesdits moyens de roulement, le corps cylindrique (1) est *étant* réalisé en un matériau synthétique, et est aménagé pour recevoir à chacune de ses extrémités (1a-1b) un flasque (2-3) sous forme de disque présentant sur sa couronne une pluralité de trous pour la fixation des rayons de roue, lesdits flasques étant rapportés et fixés sur ou avec les extrémités du corps par montage pour assurer une tenue ferme, le corps et les flasques *étant* agencés avec des moyens de liaison mâle femelle (7-7) complémentaires permettent leur positionnement relatif, le corps (1) *étant* agencé à chacune de ses extrémités (1a-1b) sur sa périphérie circulaire avec une alternance de languettes (1g) et de saillies ou creux, lesdites languettes constituant des crans, cet agencement *étant* établi selon un pas régulier et sur une profondeur sensiblement supérieure à l'épaisseur des flasques (2-3),
***caractérisé* en ce que** les moyens de roulement (5) sont établis avec un diamètre sensiblement supérieur au diamètre des cavités réceptrices formées dans le moyeu et ces moyens de roulement sont emmanchés à force dans leur siège, et **en ce que** leur positionnement provoque une légère déformation des extrémités du corps de moyeu, notamment au niveau des languettes qui ont tendance à s'expanser très légèrement radialement, et **en ce que** lesdites languettes (1g) en débordement ont un effet de contre appui sur les flasques et donc de retenue.

2. Moyeu selon la revendication 1, **caractérisé en ce que** le corps présente, à ses extrémités latérales (1a-1b), un épaulement périphérique (1c) permettant le positionnement, le centrage des flasques (2) en matériau métallique, et **en ce que** le guidage en position de flasques sur le corps est obtenu par des moyens de liaison mâle femelle formés sur les flasques et les extrémités latérales du corps.

3. Moyeu selon la revendication 2, **caractérisé en ce que** chaque flasque présente dans sa cavité intérieure au moins une encoche (2.b) susceptible de s'engager sur au moins une forme en saillie (1.d) formant détrompeur établie sur les parties latérales d'extrémité dudit corps.

4. Moyeu selon la revendication 1, **caractérisé en ce que** le corps cylindrique présente intérieurement des nervures (1e), formant butées pour des organes de roulement (4), une entretoise (6) étant disposée entre lesdits roulements.

5. Moyeu selon l'une quelconque des revendications 1 à 4, **caractérisé en ce que** les flasques (2) sont emmanchés à force sur le corps.

6. Moyeu selon la revendication 1 **caractérisé en ce que** ces languettes sont profilée de manière identique (1g.a) avec un profil curviligne.

7. Moyeu selon la revendication 1, **caractérisé en ce que** l'une des languettes (1g.b) est profilée différemment en jouant la fonction de détrompeur, et **en ce qu'**elle présente une partie complémentaire profilée en rampe.

8. Moyeu selon les revendications 6 et 7, **caractérisé en ce que** les deux flasques (2-3) sont agencés sur leur couronne intérieure avec des cavités (2d-3d) toutes identiques de profil complémentaire à celles des languettes (1g.a) pour permettre leur insertion et positionnement autour de ces languettes.

9. Moyeu selon la revendication 8, **caractérisé en ce que** l'une des cavités (2e-3e) présente un profil différent des cavités (2d-3d) pour permettre l'adaptation autour de la languette détrompeur (1g.b1) formée sur le corps.

10. Moyeu selon l'une quelconque des revendications 6 et 7, **caractérisé en ce que** la hauteur (h1) des languettes (1g) est sensiblement supérieure à l'épaisseur (e) des flasques (2-3), de sorte qu'après positionnement des flasques sur les extrémités des moyeux, lesdites languettes débordent sensiblement.

11. Moyeu selon la revendication 6, **caractérisé en ce que** le corps (1) présente des moyens de guidage de l'entretoise sous forme de trois nervures (1m) radiales longitudinales établies dans la longueur du corps en constituant entre autre des moyens de butée des roulements, et **en ce que** le corps (1) présente entre les nervures précitées trois autres zones en saillie (1n) de moindre hauteur, mais pouvant être établies sur la longueur du moyeu, et **en ce que** les saillies (1n) et nervures (1m) constituent par leur face en regard des moyens de butée du roulement (5).

## Claims

1. Wheel hub for a light vehicle of the wheelchair, cycle and similar transport means type, of the type comprising a cylindrical body (1) receiving, at the end, disc-shaped flanges receiving, in their ring part, holes for fixing the ends of spokes, the body receiving, on the inside, rolling means with or without a spacer between said rolling means, the cylindrical body (1) being produced in a synthetic material and provided to receive, at each of its ends (1a-1b), a disc-shaped flange (2-3) having, on its ring, a plurality of holes for fixing spokes, said flanges being added and fixed on or with the ends of the body by mounting in order to guarantee a firm hold, the body and the flanges being arranged with complementary male/female linking means (7-7) allowing their relative positioning, the body (1) being arranged at each of its ends (1a-1b) on its circular periphery with alternating tongues (1g) and projections or hollows, said tongues constituting catches, this arrangement being established with a uniform pitch and over a depth substantially greater than the thickness of the flanges (2-3), **characterized in that** the rolling means (5) are established with a diameter that is substantially greater than the diameter of the receiving cavities formed in the hub and these rolling means are force-fitted in their seat, and **in that** their positioning gives rise to a slight deformation of the ends of the hub body, particularly at the tongues, which tend to expand radially very slightly, and **in that** said projecting tongues (1g) have a counter-bearing and thus retention effect on the flanges.

2. Hub according to Claim 1, **characterized in that** the body has, at its lateral ends (1a-1b), a peripheral shoulder (1c) allowing the positioning, or centring, of the flanges (2) made from metallic material, and **in that** the flanges are guided into position on the body by male/female linking means formed on the flanges and the lateral ends of the body.

3. Hub according to Claim 2, **characterized in that** each flange has, in its inner cavity, at least one notch (2b) capable of engaging on at least one projecting shape (1d), forming a polarizer, established on the end lateral parts of said body.

4. Hub according to Claim 1, **characterized in that** the cylindrical body has, on the inside, ribs (1e) forming stops for the rolling members (4), a spacer (6) being arranged between said bearings.

5. Hub according to any one of Claims 1 to 4, **characterized in that** the flanges (2) are force-fitted onto the body.

6. Hub according to Claim 1, **characterized in that** these tongues are profiled identically (1ga), with a curvilinear profile.

7. Hub according to Claim 1, **characterized in that** one of the tongues (1gb) is profiled differently, acting as polarizer, and **in that** it has a complementary part profiled as a ramp.

8. Hub according to Claims 6 and 7, **characterized in that** the two flanges (2-3) are arranged on their inner ring with cavities (2d-3d), which are all identical, with a profile that complements those of the tongues (1ga) to allow their insertion and positioning around these tongues.

9. Hub according to Claim 8, **characterized in that** one of the cavities (2e-3e) has a different profile from the cavities (2d-3d) to allow fitting around the polarizing tongue (1gb1) formed on the body.

10. Hub according to either of Claims 6 and 7, **characterized in that** the height (h1) of the tongues (1g) is substantially greater than the thickness (e) of the flanges (2-3) such that, after positioning of the flanges on the ends of the hubs, said tongues project to a substantial extent.

11. Hub according to Claim 6, **characterized in that** the body (1) has means for guiding the spacer in the form of three longitudinal radial ribs (1m) established in the length of the body, constituting *inter alia* stop means for the bearings, and **in that** the body (1) has, between the above-mentioned ribs, three other projecting zones (In) of smaller height but able to be established over the length of the hub, and **in that** the projections (In) and ribs (1m) constitute, by means of their opposing face, stop means for the bearing 5.

## Patentansprüche

1. Radnabe für leichte Fahrzeuge wie Rollstühle, Fahrräder und ähnliche Transportmittel mit einem zylindrischen Hauptteil (1), der an den Enden Flansche in Form von Scheiben und in seinem Kranz an den Enden der Radspeichen Befestigungslöcher aufnimmt, wobei der Hauptteil in seinem Innern Rollen mit oder ohne Verstrebung zwischen den Rollen aufnimmt, wobei der zylindrische Hauptteil (1) aus einem synthetischen Material hergestellt ist, und so angeordnet ist, dass er an jedem seiner Enden (1a-1b) einen Flansch (2-3) in Form einer Scheibe aufnimmt, die an ihrern Kranz eine Vielzahl von Löchern für die Befestigung der Radspeichen aufweist, wobei die Flansche durch Montage an den Enden des Hauptteils aufgesetzt und befestigt sind, um einen sicheren Halt zu gewährleisten, wobei der Hauptteil und die Flansche mit zusätzlichen Verbindungselementen (7-7) angeordnet sind, die ihre relative Positionierung ermöglichen, wobei der Hauptteil (1) an seinen Enden (1a-1b) über seine Peripherie abwechselnd Zungen (1g) und Vorsprünge oder Vertiefungen aufweist, wobei die Zungen Einkerbungen bilden, und diese Anordnung eine regelmäßige Teilung und eine Tiefe besitzt, die deutlich größer ist als die Stärke der Flansche (2-3), und **dadurch gekennzeichnet, dass** die Rollen (5) einen deutlich größeren Durchmesser haben als die Aufnahrnevertiefungen in der Nabe und diese Rollen mit Kraft in ihren Sitz gedrückt werden, und ihre Positionierung eine leichte Verformung der Enden des Nabenhauptteils erzeugt, insbesondere im Bereich der Zungen, die sich radial leicht ausdehnen, und dass die hervorstehenden Zungen (1g) gegen die Flansche drücken und damit eine Rückhaltewirkung erzeugen.

2. Nabe nach Anspruch 1, **dadurch gekennzeichnet, dass** der Hauptteil am Umfang seiner seitlichen Enden (1a-1b) einen Ansatz (1c) aufweist, der die Positionierung und Zentrierung der Flansche (2) aus Metall ermöglicht, und dass man die Positionierung bzw. Führung der Flansche an dem Hauptteil durch Verbindungselemente erhält, die sich an den Flanschen und an den seitlichen Enden des Hauptteils befinden.

3. Nabe nach Anspruch 2, **dadurch gekennzeichnet, dass** jeder Flansch in seiner Innenvertiefung mindestens eine Kerbe (2.b) besitzt, die mindestens in einen Vorsprung (1.d) eingreifen kann, die eine Führungsbohrung bildet, und sich an den seitlichen Enden des genannten Hauptteils befindet.

4. Nabe nach Anspruch 1, **dadurch gekennzeichnet, dass** der zylindrische Hauptteil in seinem Innern Rippen (1e) aufweist, die für die Rollenelemente (4) einen Anschlag bilden, wobei zwischen den Rollen ein Steg (6) angeordnet ist.

5. Nabe nach einem der vorhergehenden Ansprüche 1 bis 4, **dadurch gekennzeichnet, dass** die Flansche (2) mit Kraft an dem Hauptteil eingesteckt sind.

6. Nabe nach Anspruch 1, **dadurch gekennzeichnet, dass** die Zungen auf identische Art und Weise (1g.a) mit einem gekrümmten Profil profiliert sind.

7. Nabe nach Anspruch 1, **dadurch gekennzeichnet, dass** eine der Zungen (1g.b) anders profiliert ist, und die Funktion einer Führungsbohrung besitzt, und einen zusätzlichen, in einer schiefen Ebene profilierten Teil darstellt.

8. Nabe nach den Ansprüchen 6 und 7, **dadurch gekennzeichnet, dass** die beiden Flansche (2-3) an ihrem Innenkranz Vertiefungen (2d-3d) aufweisen, die das gleiche Zusatzprofil aufweisen wie die Zungen (1g.a), so dass sie eingeschoben und um diese Zungen herum positioniert werden können.

9. Nabe nach Anspruch 8, **dadurch gekennzeichnet, dass** eine der Vertiefungen (2e-3e) ein anderes Profil besitzt als die Vertiefungen (2d-3d), so dass sie um die Zungen herum, die als Führungsbohrung dienen (1g.b1) und sich an dem Hauptteil befinden, angepasst werden kann.

10. Nabe nach einem der Ansprüche 6 und 7, **dadurch gekennzeichnet, dass** die Höhe (h1) der Zungen (1g) deutlich größer ist als die Stärke (e) der Flansche (2-3), so dass die Zungen nach Positionierung der Flansche an den Enden der Naben deutlich überstehen.

11. Nabe nach Anspruch 6, **dadurch gekennzeichnet, dass** der Hauptteil (1) Führungselemente für die Verstrebung in Form von drei radialen, längsseitigen Rippen (1m) besitzt, die entlang dem Hauptteil verlaufen, indem sie unter anderem Anschlagelemente für die Rollen bilden, und dass der Hauptteil (1) zwischen den oben genannten Rippen drei weitere, vorstehende Bereiche (1n) mit geringerer Höhe besitzt, die jedoch entlang der Nabe verlaufen können, und dass die Vorsprünge (1n) und Rippen (1m) durch ihre gegenüberliegende Seite Anschlagelemente für die Rollen (5) darstellen.
